# EUROPEAN PATENT SPECIFICATION

(11) **EP 1 606 543 B1**
(45) Date of publication and mention of the grant of the patent: **15.04.2009**
(21) Application number: 04713555.3
(22) Date of filing: 23.02.2004
(51) Int. Cl.: F16L 23/024, C23C 14/34, C23C 14/35, H01J 37/34

(54) **UNIVERSAL VACUUM COUPLING FOR CYLINDRICAL TARGET**
UNIVERSELLE VAKUUMSKUPPLUNG FÜR EIN ZYLINDRISCHES AUFNAHMETEIL
RACCORD A VIDE UNIVERSEL POUR UNE CIBLE CYLINDRIQUE

(30) Priority: 25.03.2003 EP 03100767
(43) Date of publication of application: 21.12.2005
(73) Proprietor: Bekaert Advanced Coatings, 9800 Deinze (BE)
(72) Inventor: DE BOSSCHER, Wilmert, B-9031 Drongen (BE)
(74) Representative: Messely, Marc
(86) International application number: PCT/EP2004/050188
(87) International publication number: WO 2004/085902

(56) References cited:
- EP-A- 1 092 109
- EP-A- 1 106 893
- US-A- 5 591 314

## Description

### Field of the invention.

The present invention relates to a coupling system to releasably affix a cylindrical target to a spindle.

### Background of the invention.

Cylindrical magnetrons with rotating cylindrical targets have been used more and more over the last decade. A cylindrical target in operation must be supported, rotated, cooled and energized. Normally the sputtering installation is energized through one removable spindle at one end of the cylindrical target (cantilever mode) or two removable spindles at the two ends of the cylindrical target.

Supporting, rotating, energizing and cooling of the cylindrical targets is all done through the spindles. One side of the cylindrical target, the outer side of the target material operates under vacuum while the other side of the cylindrical target, the inner side, operates under substantially higher pressures. Water leaks occurring at the interface between the spindle and the cylindrical target have resulted in the development of various vacuum coupling and sealing systems.

US-A-5,591,314 (Vanderstraeten, now Bekaert VDS) discloses a coupling system to releasably affix a cylindrical target to a spindle by means of a threaded spindle collar engaging threads on the outside surface of the target.

EP-B1-1 092 109 (Sinvaco, now Bekaert VDS) which is regarded as the closest prior art discloses a coupling system where the cylindrical target is axially slidable over a first end portion of the spindle. The spindle terminates in a flange portion and the cylindrical target has a flange extremity. The coupling system further has a clamping ring which is composed of two or more damp segments. Each damp segment has a damp recess. This damp recess encloses both the flange portion and the flange extremity so as to couple the spindle to the cylindrical target.

EP-A1-1 106 893 (Unaxis) discloses yet another coupling system. The aim of this system is to avoid the helical groove and spring of US-A-5,591,314. This is done by providing the cylindrical target with a groove at its ends. The coupling further comprises a first ring and a second ring. The first ring or part of the first ring engages with the groove of the cylindrical target and the second ring engages with the spindle. Both the first ring and the second ring are connected with one another to keep the cylindrical target and the spindle under an axial tension. Tautening occurs only between the rings.

US-B1-6,375,815 (Lynn) discloses a coupling system where the spindle has a flange portion and the cylindrical target a flange extremity. Both the spindle and the cylindrical target are held together by means of a split clamping collar and a retainer ring. The split clamping collar encloses the flange portion of the spindle and the flange extremity of the cylindrical target. The split clamping collar has inside threads. The retainer ring is slidable over the spindle and rotatable against the spindle. The retainer ring has outside threads, which are adapted to engage with the threads of the split clamping collar in order to couple the spindle to the cylindrical target.

In the Vanderstraeten embodiment the threaded end of the cylindrical target only fits with the Vanderstraeten spindle collar.

In the Unaxis embodiment the grooved end of the cylindrical target only fits with the first Unaxis ring.

In the Sinvaco embodiment the flange extremity of the cylindrical target has an outwardly angled step.

In the Lynn embodiment the flange extremity of the cylindrical target has an inwardly angled step.

Adapting one type of cylindrical target to another type of spindle means an irreversible destruction of some parts at the end of the cylindrical target.

So various systems exist next to each other. The result is that once a coater has bought a sputter installation with determined spindles he is obliged to stick to determined cylindrical targets.

### Summary of the invention.

It is an object of the present invention to avoid the drawbacks of the prior art.

It is also an object of the present invention to increase the interchangeability of cylindrical targets.

It is yet another object of the present invention to avoid changes to existing cylindrical targets or to existing spindles.

It is an object of the present invention to enable coupling of spindles of one system to cylindrical targets of another system.

According to a first embodiment of the invention as defined in claim 1 there is provided a coupling system to releasably affix a cylindrical target to a spindle. The coupling system comprises :
a) a spindle which terminates in a flange portion ;
b) a cylindrical target which has at its end a grooved outside circumferential surface ;
c) an interface ring which has a circumferential inner surface adapted to engage with the grooved outside circumferential surface of the cylindrical target ; the interface ring further has a flange extremity ;
d) a clamping ring which is adapted to engage with the flange portion and with the interface ring in order to hold the cylindrical target to the spindle ;
e) one or more sealing rings between the spindle and the cylindrical target.

The interface ring is different from the clamping ring.

The cylindrical target has an outer end diameter and the interface ring has an inner diameter which may be - at least locally - greater than or equal to the outer end diameter of the cylindrical target.

The terms outer end diameter and inner diameter refer to the main part of resp. the cylindrical target and the interface ring, not taking into account local grooves or local protrusions.

According to a second embodiment of the invention as defined in claim 2 there is provided a coupling system to releasably affix a cylindrical target to a spindle. The coupling system comprises :
a) a spindle terminating in a flange portion ;
b) a cylindrical target having at its end a grooved inside circumferential surface ;
c) an interface ring having a circumferential outer surface adapted to engage with the grooved inside circumferential surface of the cylindrical target ;
d) a clamping ring which is adapted to engage with the flange portion and with the interface ring to hold the cylindrical target to the spindle ;
e) one or more sealing rings located between the spindle and the cylindrical target.

The cylindrical target has an inner end diameter and the interface ring has an outer diameter which may be - at least locally - smaller than or equal to the inner end diameter of the cylindrical target.

The terms inner end diameter and outer diameter refer to the main part of resp. the cylindrical target and the interface ring, not taking into account local protrusions or local grooves.

Within the context of the present invention, the term cylindrical target both refers to a cylindrical target made out of a backup tube covered with a layer of target material and to a self supporting cylindrical target which is completely made out of the target material.

The grooved outside or inside circumferential surface of the cylindrical target may be a helical groove with e.g. at least one revolution. A spring adapted to the helical groove can be inserted between the cylindrical target and the interface ring. In this case the tautening action occurs between the interface ring and the cylindrical target.

According to the invention, which is defined in independent claims 1 and 2, the interface ring further may have a flange extremity.

The clamping ring is composed of two or more clamping segments. Each segment may have an inwardly oriented damp recess. The clamp recess encloses the flange portion of the spindle and the flange extremity of the interface ring. Such a clamping ring can easily be removed from the coupling system. More than two clamping segments may be advantageous in comparison with two clamping segments because of a higher number of point contacts in case the clamping ring gets hotter than the target.

So the outer surface of the interface ring with its flange extremity fits with the split clamping ring of e.g. the Sinvaco embodiment. As a result, thanks to the interface ring the grooved (both helical and non-helical) cylindrical targets now also fit with another type of coupling.

In another preferable embodiment, the interface ring may have radially protruding parts, e.g. in the form of a helix. The clamping ring engages with these protruding parts and, for example, may be screwed on the interface ring.

In a practical embodiment of the invention, the coupling system has a cylindrical target ending with a recess. According to the invention, the interface ring has a protruding part meeting this recess to facilitate positioning of the interface ring vis-à-vis the target.

### Brief description of the drawings.

The invention will now be described into more detail with reference to the accompanying drawings wherein
- FIGURE 1 is a cross-section of a first embodiment of a coupling system according to the present invention ;
- FIGURE 2 is a detailed view of a first embodiment of a coupling system according to the present invention ;
- FIGURE 3 is a side view of a first embodiment of a coupling system according to the present invention ;
- FIGURE 4 is a cross-section of a first alternative of a first embodiment of a coupling system according to the present invention ;
- FIGURE 5 is a cross-section of a second alternative of a first embodiment of a coupling system not forming part of the present invention ;
- FIGURE 6 is a cross-section of a second embodiment of a coupling system according to the present invention.

### Description of the preferred embodiments of the invention.

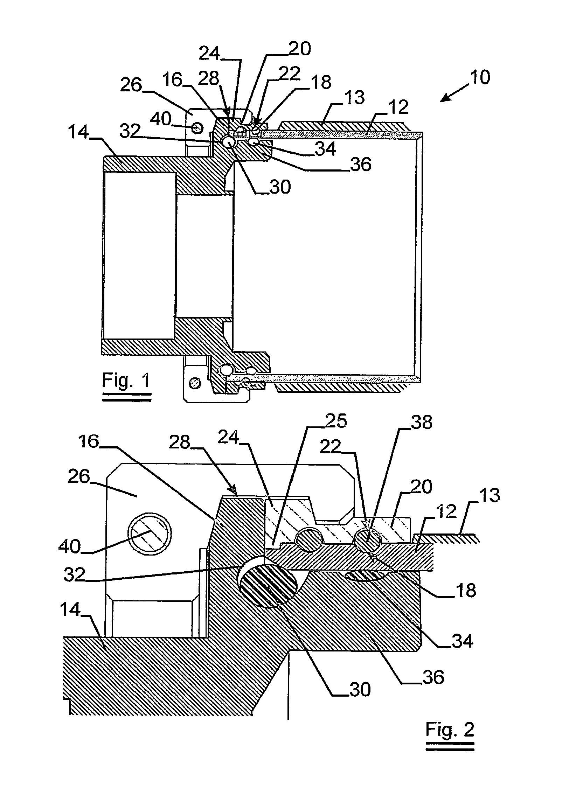

FIGURE 1, FIGURE 2 and FIGURE 3 illustrate a first embodiment of the coupling system with a helical groove in the cylindrical target.

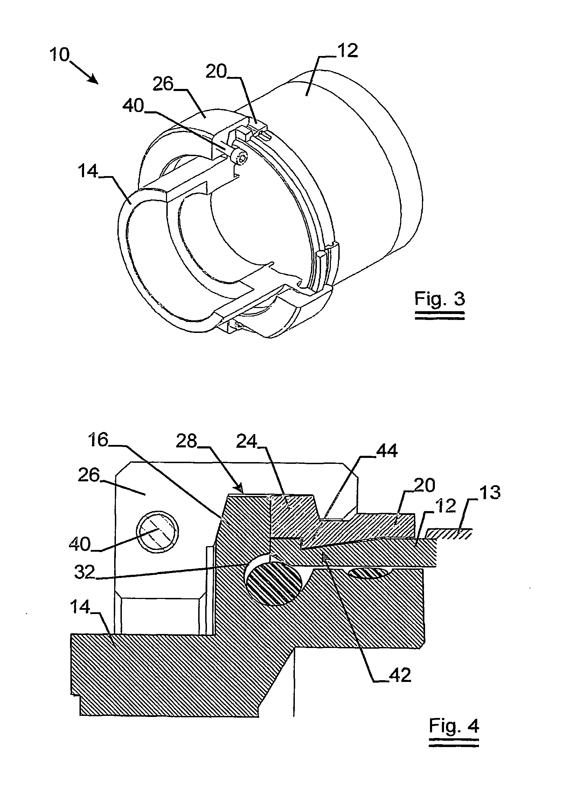

FIGURE 4 illustrates a first alternative to the first embodiment of the coupling system with a non-helical groove in the coupling system.

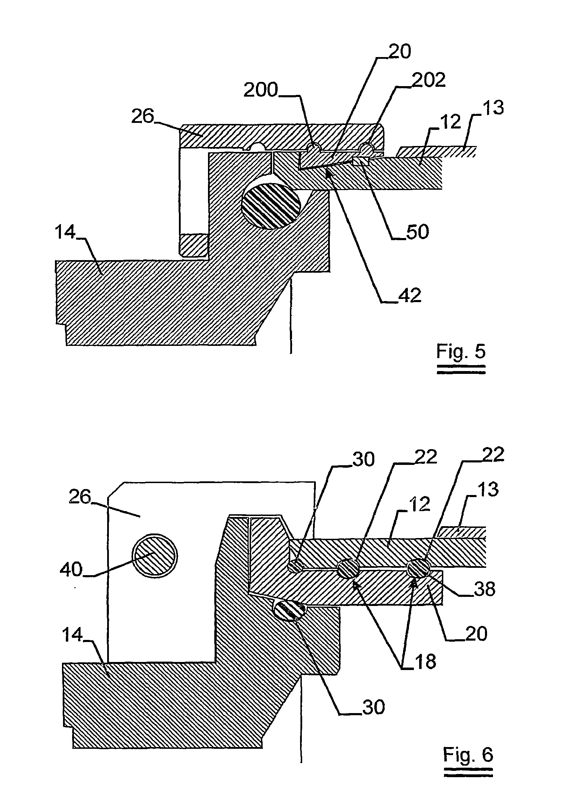

FIGURE 5 illustrates a second alternative to the first embodiment of the coupling system with an interface ring with radially protruding parts.

Reference is first made to FIGURE 1, FIGURE 2 and FIGURE 3. A coupling system 10 is to releasably affix a cylindrical target 12 to a spindle 14. The target 12 may be provided with target material 13 to be sputtered. The spindle 14 terminates in a flange portion 16. The cylindrical target 12 has at its end a helical or spiral groove 18. The helix of the groove makes at least one revolution.

The coupling system 10 further comprises an interface ring 20. In this first embodiment the interface ring 20 is made of one single piece. This interface ring 20 has an inner diameter, which is greater or equal than the outer end diameter of the cylindrical target 12. The interface ring 20 has a circumferential inner surface 22, which is adapted to engage with the helical or spiral groove 18 of the cylindrical target 12. The interface ring 20 may be screwed over the cylindrical target 12. The interface ring 20 further has a flange extremity 24. In coupled status, the flange extremity 24 of the interface ring 20 abuts against the flange portion 16 of spindle 14. Preferably the flange extremity 24 has an inwardly protruding part 25. This protruding part 25 facilitates the positioning of the interface ring 20 to the target 12 since it may fit in a target recess at the extremity of the cylindrical target.

The coupling system 10 further comprises a clamping ring 26, which is composed of two or more damp segments. Each damp segment has an inwardly oriented damp recess 28. In coupled status this damp recess 28 encloses the flange portion 16 of spindle 14 and the flange extremity 24 the interface ring 20 in order to hold the cylindrical target 12 to the spindle 12. Preferably the surfaces of the flange portion 16 and of the flange extremity 24 are slightly conical. The clamp recess 28 has also matching conical surfaces.

The coupling system further comprises an O-sealing ring 30 in an O-ring groove 32 of the flange portion 16 and a sealing ring 34 in a groove of the spindle end 36.

A helical spring 38 is inserted in the helical or spiral groove 18. The spring 38 also meets with the circumferential inner surface 22 of interface ring 20. Spring 38 is not permanently fixed to the helical or spiral groove 18 and can be made of another material than the material of the cylindrical target 12 or the material of the backup tube of the cylindrical target 12.

The damp segments of clamping ring 26 are held together by means of bolting means 40.

FIGURE 4 shows a detailed view of a cross-section of a first alternative to the first embodiment of the coupling system 10. The difference with FIGURE 3 is now that the cylindrical target 12 now has a non-helical groove 42. As a result the interface ring 20 has an inner circumferential surface 44 which matches this non-helical groove 42. The interface ring 20 is here composed out of two or more segments in order to enable to mount the interface ring 20 on the cylindrical target 12.

FIGURE 5 shows a detailed view of a cross-section of a second alternative to the first embodiment of the coupling system 10, not forming part of the present invention. The differences with FIGURE 3 and FIGURE 4 mainly lie in the type of interface ring 20 and the type of clamping ring 26.

The interface ring 20 now has radially protruding parts 200 and 202 which may take the form of a helix. The interface ring 20 fits in a cylindrical groove 42 of target 12. In order to prevent the interface ring 20 from rotating a pin 50 may be provided which fits into the target 12 and into the interface ring 20. Alternatively the pin 50 may be integrated with the interface ring 20 or with the target 12.

The clamping ring 26 has been threaded at its inner side and may be screwed on the protruding helix 200, 202 of the interface ring 20 in order to damp the cylindrical target 12 to the spindle 14.

FIGURE 6 shows a cross-section of a second embodiment of the coupling system 10. The target is provided with a groove 18 in the form of a helical thread. The difference with the first embodiment of FIGUREs 1 to 3 is now that the thread 18 is now positioned at the inside circumferential surface of the target 12.

## Claims

1. A coupling system (10) to releasably affix a cylindrical target (12) to a spindle (14), said coupling system comprising :
a) a spindle (14) terminating in a flange portion (16);
b) a cylindrical target (12) having at its end a grooved outside circumferential surface ;
c) an interface ring (20) having a circumferential inner surface adapted to engage with said grooved outside circumferential surface of said cylindrical target, and a flange extremity (24);
d) a clamping ring (26) adapted to engage at its one side with said flange portion and to engage radially at its other side with said interface ring (20) to hold the cylindrical target (12) to the spindle (14) said clamping ring (26) being composed of two or more clamping segments, each segment having an inwardly oriented clamp recess (28), said clamp recess for enclosing said flange portion (16) of said spindle (14) and said flange extremity (24) of said interface ring (20);
e) one or more sealing rings (30) between said spindle (14) and said cylindrical target (12);
**characterised in that**
said cylindrical target ends with a recess, said interface ring having a protruding part (25) meeting said recess to facilitate positioning of said interface ring (20) vis-à-vis said target (12).

2. A coupling system to releasably affix a cylindrical target (12) to a spindle (14), said coupling system comprising :
a) a spindle (14) terminating in a flange portion ;
b) a cylindrical target (12) having at its end a grooved inside circumferential surface;
c) an interface ring (20) having a circumferential outer surface adapted to engage with said grooved inside circumferential surface of said cylindrical target, and a flange extremity ;
d) a clamping ring (26) adapted to engage at its one side with said flange portion and to engage radially at its other side with said interface ring (20) to hold the cylindrical target (12) to the spindle (14) said clamping ring (26) being composed of two or more clamping segments, each segment having an inwardly oriented clamp recess, said clamp recess for enclosing said flange portion of said spindle (14) and said flange extremity of said interface ring (20); ;
e) one or more sealing rings (30) between said spindle and said cylindrical target;
**characterised in that**
said cylindrical target ends with a recess, said interface ring having a protruding part meeting said recess to facilitate positioning of said interface ring vis-à-vis said target.

3. A coupling system according to claim 1 wherein said cylindrical target has an outer end diameter and wherein said interface ring has an inner diameter which is greater or equal to the outer end diameter of the cylindrical target.

4. A coupling system according to claim 2 wherein said cylindrical target has an inner end diameter and wherein said interface ring has an outer diameter which is smaller or equal to the inner end diameter of the cylindrical target.

5. A coupling system according to any one of the preceding claims wherein said grooved outside circumferential surface or said grooved inside circumferential surface is a helical groove (18).

6. A coupling system according to claim 5 wherein said helical groove (18) has at least one revolution.

7. A coupling system according to any one of claims 1 to 6 wherein said interface ring has some radially protruding parts (24) and wherein said clamping ring (26) engages with said radially protruding parts.

8. A coupling system according to any one of the preceding claims wherein said one or more sealings rings are an O-ring (30).

9. A coupling system according to claim 7 wherein said O-ring (30) is at least partially located in said flange portion (16) of said spindle (14).

10. A coupling system according to any one of claims 5 or 6, said coupling system further comprising a resilient member (38), said resilient member fitting in said helical groove (18).

11. A coupling system according to claim 9 wherein said resilient member is a spring (38).

12. A coupling system according to any one of the preceding claims wherein said target is provided with target material to be sputtered.

## Patentansprüche

1. Kupplungssystem (10) zur lösbaren Befestigung eines zylindrischen Targets (12) an einer Spindel (14), wobei das Kupplungssystem Folgendes umfasst:
a) eine Spindel (14), die in einem Flanschteil (16) abschließt;
b) ein zylindrisches Target (12), das an seinem Ende eine genutete Außenumfangsfläche aufweist;
c) einen Grenzflächenring (20) mit einer Innenumfangsfläche, die zum Eingriff mit der genuteten Außenumfangsfläche des zylindrischen Targets ausgeführt ist, und einem Flanschende (24) ;
d) einen Klemmring (26), der zum Eingriff an seiner einen Seite mit dem Flanschteil und zum radialen Eingriff an seiner anderen Seite mit dem Grenzflächenring (20) zum Halten des zylindrischen Targets (12) an der Spindel (14) ausgeführt ist, wobei der Klemmring (26) aus zwei oder mehr Klemmsegmenten besteht, wobei jedes Segment eine nach innen gerichtete Klemmaussparung (28) aufweist, wobei die Klemmaussparung zum Einschließen des Flanschteils (16) der Spindel (14) und des Flanschendes (24) des Grenzflächenrings (20) bestimmt ist;
e) einen oder mehrere Dichtringe (30) zwischen der Spindel (14) und dem zylindrischen Target (12);
**dadurch gekennzeichnet, dass**
das zylindrische Target mit einer Aussparung endet, wobei der Grenzflächenring einen vorragenden Teil (25) aufweist, der auf die Aussparung trifft, um die Positionierung des Grenzflächenrings (20) gegenüber dem Target (12) zu erleichtern.

2. Kupplungssystem zur lösbaren Befestigung eines zylindrischen Targets (12) an einer Spindel (14),
wobei das Kupplungssystem Folgendes umfasst:
a) eine Spindel (14), die in einem Flanschteil abschließt;
b) ein zylindrisches Target (12), das an seinem Ende eine genutete Innenumfangsfläche aufweist;
c) einen Grenzflächenring (20) mit einer Außenumfangsfläche, die zum Eingriff mit der genuteten Innenumfangsfläche des zylindrischen Targets ausgeführt ist, und einem Flanschende;
d) einen Klemmring (26), der zum Eingriff an seiner einen Seite mit dem Flanschteil und zum radialen Eingriff an seiner anderen Seite mit dem Grenzflächenring (20) zum Halten des zylindrischen Targets (12) an der Spindel (14) ausgeführt ist, wobei der Klemmring (26) aus zwei oder mehr Klemmsegmenten besteht, wobei jedes Segment eine nach innen gerichtete Klemmaussparung zum Einschließen des Flanschteils der Spindel (14) und des Flanschendes des Grenzflächenrings (20) aufweist;
e) einen oder mehrere Dichtringe (30) zwischen der Spindel und dem zylindrischen Target;
**dadurch gekennzeichnet, dass**
das zylindrische Target mit einer Aussparung endet, wobei der Grenzflächenring einen vorragenden Teil aufweist, der auf die Aussparung trifft, um die Positionierung des Grenzflächenrings gegenüber dem Target zu erleichtern.

3. Kupplungssystem nach Anspruch 1, wobei das zylindrische Target einen Außenenddurchmesser aufweist und wobei der Grenzflächenring einen Innendurchmesser aufweist, der größer gleich dem Außenenddurchmesser des zylindrischen Targets ist.

4. Kupplungssystem nach Anspruch 2, wobei das zylindrische Target einen Innenenddurchmesser aufweist und wobei der Grenzflächenring einen Außendurchmesser aufweist, der kleiner gleich dem Innenddurchmesser des zylindrischen Targets ist.

5. Kupplungssystem nach einem der vorhergehenden Ansprüche, wobei die genutete Außenumfangsfläche oder die genutete Innenumfangsfläche eine Spiralnut (18) ist.

6. Kupplungssystem nach Anspruch 5, wobei die Spiralnut (18) mindestens eine Umdrehung aufweist.

7. Kupplungssystem nach einem der Ansprüche 1 bis 6, wobei der Grenzflächenring mehrere radial vorragende Teile (24) aufweist und wobei der Klemmring (26) die radial vorragenden Teile in Eingriff nimmt.

8. Kupplungssystem nach einem der vorhergehenden Ansprüche, wobei der eine oder die mehreren Dichtringe ein O-Ring (30) sind.

9. Kupplungssystem nach Anspruch 7, wobei der O-Ring (30) zumindest teilweise in dem Flanschteil (16) der Spindel (14) angeordnet ist.

10. Kupplungssystem nach einem der Ansprüche 5 oder 6, wobei das Kupplungssystem weiterhin ein elastisches Glied (38) umfasst, wobei das elastische Glied in die Spiralnut (18) passt.

11. Kupplungssystem nach Anspruch 9, wobei das elastische Glied eine Feder (38) ist.

12. Kupplungssystem nach einem der vorhergehenden Ansprüche, wobei das Target mit zu sputterndem Targetmaterial versehen ist.

## Revendications

1. Système de raccord (10) pour la fixation amovible d'une cible cylindrique (12) à une broche (14), ledit système de raccord comprenant :
a) une broche (14) se terminant par une partie bride (16) ;
b) une cible cylindrique (12) comportant à son extrémité une surface circonférentielle extérieure rainurée ;
c) une bague d'interface (20) comportant une surface circonférentielle intérieure adaptée pour être en prise avec ladite surface circonférentielle extérieure rainurée de ladite cible cylindrique, et une extrémité bride (24) ;
d) une bague de serrage (26) adaptée pour être en prise sur un de ses côtés avec ladite partie bride et pour être en prise radialement sur son autre côté avec ladite bague d'interface (20) afin de retenir la cible cylindrique (12) sur la broche (14), ladite bague de serrage (26) étant composée de deux ou plusieurs segments de serrage, chaque segment comportant une découpe de serrage orientée intérieurement (28), ladite découpe de serrage servant à accueillir ladite partie bride (16) de ladite broche (14) et ladite extrémité bride (24) de ladite bague d'interface (20) ;
e) une ou plusieurs bagues d'étanchéité (30) entre ladite broche (14) et ladite cible cylindrique (12) ;
**caractérisé en ce que**
ladite cible cylindrique se termine par une découpe, ladite bague d'interface comportant une partie saillante (25) qui se joint à ladite découpe pour faciliter le positionnement de ladite bague d'interface (20) vis-à-vis de ladite cible (12).

2. Système de raccord pour la fixation amovible d'une cible cylindrique (12) à une broche (14), ledit système de raccord comprenant :
a) une broche (14) se terminant par une partie bride ;
b) une cible cylindrique (12) comportant à son extrémité une surface circonférentielle intérieure rainurée ;
c) une bague d'interface (20) comportant une surface circonférentielle extérieure adaptée pour être en prise avec ladite surface circonférentielle intérieure rainurée de ladite cible cylindrique, et une extrémité bride ;
d) une bague de serrage (26) adaptée pour être en prise sur un de ses côtés avec ladite partie bride et pour être en prise radialement sur son autre côté avec ladite bague d'interface (20) afin de retenir la cible cylindrique (12) sur la broche (14), ladite bague de serrage (26) étant composée de deux ou plusieurs segments de serrage, chaque segment comportant une découpe de serrage orientée intérieurement (28), ladite découpe de serrage servant à accueillir ladite partie bride de ladite broche (14) et ladite extrémité bride de ladite bague d'interface (20) ;
e) une ou plusieurs bagues d'étanchéité (30) entre ladite broche et ladite cible cylindrique ;
**caractérisé en ce que**
ladite cible cylindrique se termine par une découpe, ladite bague d'interface comportant une partie saillante qui se joint à ladite découpe pour faciliter le positionnement de ladite bague d'interface vis-à-vis de ladite cible.

3. Système de raccord selon la revendication 1, ladite cible cylindrique ayant un diamètre extérieur d'extrémité et ladite bague d'interface ayant un diamètre intérieur qui est supérieur ou égal au diamètre extérieur d'extrémité de la cible cylindrique.

4. Système de raccord selon la revendication 2, ladite cible cylindrique ayant un diamètre intérieur d'extrémité et ladite bague d'interface ayant un diamètre extérieur qui est inférieur ou égal au diamètre intérieur d'extrémité de la cible cylindrique.

5. Système de raccord selon l'une quelconque des revendications précédentes, ladite surface circonférentielle extérieure rainurée ou ladite surface circonférentielle intérieure rainurée étant une gorge hélicoïdale (18).

6. Système de raccord selon la revendication 5, ladite gorge hélicoïdale (18) faisant au moins un tour complet.

7. Système de raccord selon l'une quelconque des revendications 1 à 6, ladite bague d'interface comportant certaines parties saillantes dans le sens radial (24) et ladite bague de serrage (26) étant en prise avec lesdites parties saillantes dans le sens radial.

8. Système de raccord selon l'une quelconque des revendications précédentes, lesdites une ou plusieurs bagues d'étanchéité formant un joint torique (30).

9. Système de raccord selon la revendication 7, ledit joint torique (30) étant au moins partiellement situé dans ladite partie bride (16) de ladite broche (14).

10. Système de raccord selon l'une quelconque des revendications 5 ou 6, ledit système de raccord comprenant en outre un élément élastique (38), ledit élément élastique se logeant dans ladite gorge hélicoïdale (18).

11. Système de raccord selon la revendication 9, ledit élément élastique étant un ressort (38).

12. Système de raccord selon l'une quelconque des revendications précédentes, ladite cible étant pourvue du matériau cible devant être pulvérisé.
